# EUROPEAN PATENT APPLICATION

(11) **EP 4 503 662 A1**
(43) Date of publication of application: **05.02.2025**
(21) Application number: 23778083.8
(22) Date of filing: 27.03.2023
(51) Int. Cl.: H04W 4/029

(54) **TERMINAL INFORMATION PREDICTION METHOD AND APPARATUS, AND NETWORK ELEMENT**

(30) Priority: 28.03.2022 CN 202210314449; 01.08.2022 CN 202210920037
(71) Applicant: VIVO MOBILE COMMUNICATION CO., LTD., Dongguan, Guangdong 523863 (CN)
(72) Inventor: YU, Hang, Dongguan, Guangdong 523863 (CN); CHONG, Weiwei, Dongguan, Guangdong 523863 (CN)
(74) Representative: Conti, Marco
(86) International application number: PCT/CN2023/084034
(87) International publication number: WO 2023/185716

(57) **Abstract**

This application discloses a user equipment information prediction method and apparatus and a network element, pertaining to the field of communication. The method in embodiments of this application includes: obtaining, by a first network element, user equipment location data of a first time period using a location service LCS architecture; and inputting, by the first network element, the user equipment location data of the first time period into a traffic model or a supervised learning model, and obtaining user equipment prediction information of a second time period output by the traffic model or the supervised learning model.

## Description

### CROSS-REFERENCE TO RELATED APPLICATIONS

This application claims priority to Chinese Patent Application No. 202210314449.X filed in China on March 28, 2022, and to Chinese Patent Application No. 202210920037.0 filed in China on August 1, 2022, which are incorporated herein by reference in their entireties.

### TECHNICAL FIELD

This application pertains to the field of communications technologies, and specifically relates to a user equipment information prediction method and apparatus and a network element.

### BACKGROUND

A network data analytics function (Network Data Analytics Function, NWDAF) network element supports collection of data related to network elements or user equipment, and provides information of statistics and prediction, and the like. The NWDAF can collect data from network elements such as an access and mobility management function (Access and Mobility Management Function, AMF), a session management function (Session Management Function, SMF), or an operation administration maintenance (Operation Administration Maintenance, OAM). In the existing procedure, the NWDAF obtains location information of the user equipment through collection from the AMF, and the location information of the user equipment is coarse-grained, such as a tracking area (Tracking Area, TA) level or a cell (cell) level, which is about 1000m, that is, the NWDAF can learn from the AMF in which cell or TA the user equipment is currently located.

If an NWDAF user initiates a service request to the NWDAF, requesting the NWDAF to collect statistics about related information or make a prediction, the NWDAF may collect information from different network elements based on parameters in the request message, and returns a result to the NWDAF user after performing statistics and analysis. Such statistics and analysis results can be provided to other 5GC network elements for network optimization, or provided to a third-party application for services such as personalized recommendation or intelligent transportation planning.

Accuracy of statistics and prediction services provided by the NWDAF in the existing architecture stays at the level of TA or cell, so it is impossible to implement higher-accuracy statistics and prediction services. If the NWDAF obtains more accurate location information using the location services (Location Services, LCS) architecture, including information such as a geographical location, a moving speed, or a direction, how to use such information to provide users with more accurate location prediction remains to be studied.

### SUMMARY

Embodiments of this application provide a user equipment information prediction method and apparatus and a network element, which can resolve the prior-art problem that the NWDAF cannot predict a user equipment location by using location data of the LCS architecture.

According to a first aspect, a user equipment information prediction method is provided, including:
obtaining, by a first network element, user equipment location data of a first time period using a location service LCS architecture; and
inputting, by the first network element, user equipment location data of the first time period into a traffic model or a supervised learning model, and obtaining user equipment prediction information of a second time period output by the traffic model or the supervised learning model.

According to a second aspect, a user equipment information prediction apparatus is provided, including:
an obtaining module, configured to obtain user equipment location data of a first time period using a location service LCS architecture; and
a prediction module, configured to input the user equipment location data of the first time period into a traffic model or a supervised learning model, and obtain user equipment prediction information of a second time period output by the traffic model or the supervised learning model.

According to a third aspect, a first network element is provided, where the first network element includes a processor and a memory, and a program or instructions capable of running on the processor are stored in the memory. When the program or the instructions are executed by the processor, the steps of the method according to the first aspect are implemented.

According to a fourth aspect, a first network element is provided, including a processor and a communication interface. The communication interface is configured to obtain user equipment location data of a first time period using a location service LCS architecture; and the processor is configured to input the user equipment location data of the first time period into a traffic model or a supervised learning model, and obtain user equipment prediction information of a second time period output by the traffic model or the supervised learning model.

According to a fifth aspect, a readable storage medium is provided, where a program or instructions are stored in the readable storage medium, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program product is provided, where the computer program product is stored in a storage medium, and the computer program product is executed by at least one processor to implement the steps of the method according to the first aspect.

In the embodiments of this application, the first network element obtains the user equipment location data of the first time period using the LCS architecture, and predicts user equipment prediction information of a future time period based on a traffic model or supervised learning model corresponding to the user equipment location data, thus improving service performance of the first network element. This implements trajectory prediction for interaction between the first network element and a drone or vehicle networking architecture, thus providing intelligent traffic planning for an urban public transport system.

### BRIEF DESCRIPTION OF DRAWINGS

FIG. 1 is a block diagram of a wireless communication system to which the embodiments of this application can be applied;
FIG. 2 is a flowchart of steps of a user equipment information prediction method according to an embodiment of this application;
FIG. 3 is a flowchart of example 1 according to an embodiment of this application;
FIG. 4 is a flowchart of example 2 according to an embodiment of this application;
FIG. 5 is a schematic structural diagram of a user equipment information prediction apparatus according to an embodiment of this application;
FIG. 6 is a schematic structural diagram of a first network element according to an embodiment of this application; and
FIG. 7 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

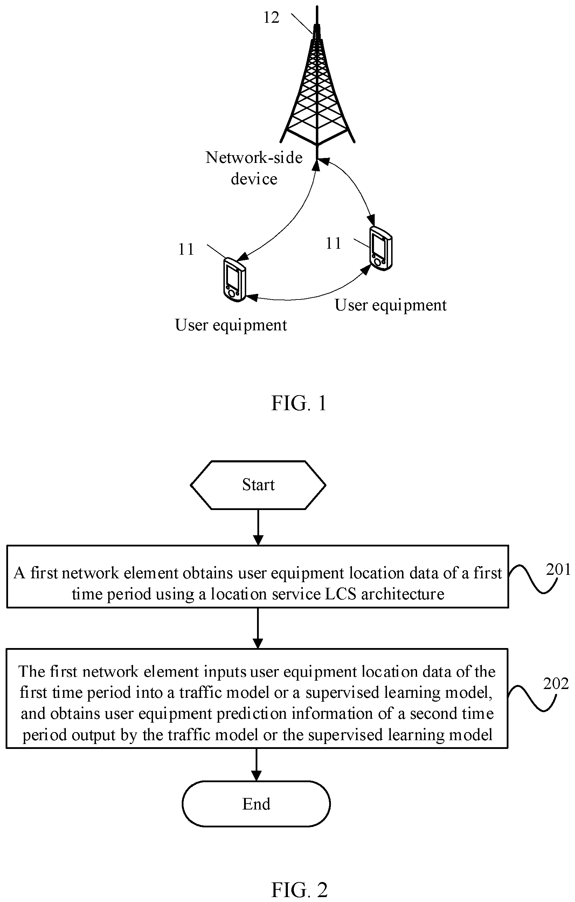

FIG. 1 is a block diagram of a wireless communication system to which the embodiments of this application can be applied. The wireless communication system includes user equipment 11 and a network-side device 12. The user equipment 11 may be a terminal-side device, such as a mobile phone, a tablet computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart j ewelry (smart bracelet, smart wristband, smart ring, smart necklace, smart anklet, smart ankle bracelet, or the like), smart wristband, smart clothing, and the like. It should be noted that a specific type of the user equipment 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized Network Configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes in detail a user equipment information prediction method provided in the embodiments of this application by using some embodiments and application scenarios thereof with reference to the accompanying drawings.

As shown in FIG. 2, an embodiment of this application further provides a user equipment information prediction method including:

Step 201: A first network element obtains user equipment location data of a first time period using a location service LCS architecture.

Optionally, the first network element mentioned in this embodiment of this application is an NWDAF network element. For example, the NWDAF obtains user equipment location data of the first time period using an interface with the LCS architecture. The user equipment location data may be historical location information stored in the NWDAF, or user equipment location data just obtained from a framework of access and mobility management function (Access and Mobility Management Function, AMF) or location management function (Location Management Function, LMF). The user equipment location data is relatively fine-grained, that is, a horizontal accuracy meets a specific location requirement for ordinary traffic, such as a level of 1-10m.

Step 202: The first network element inputs user equipment location data of the first time period into a traffic model or a supervised learning model, and obtains user equipment prediction information of a second time period output by the traffic model or the supervised learning model.

In an optional embodiment, the user equipment location data of the first time period includes at least one of the following:
identification information of the user equipment, such as a UE ID;
a group identifier of a group to which the user equipment belongs, such as a group UE ID;
geographic location information of the user equipment;
a moving speed of the user equipment at a current geographical location;
a moving direction of the user equipment at the current geographical location;
location accuracy information, including horizontal accuracy and vertical accuracy;
a time stamp (timestamp);
an age of location data (age of location); and
first indication information indicating that the user equipment is located in an external area (outdoors) or an internal area (indoors).

The external area includes at least one of the following: ground; outdoor; and outside a car; and the internal area includes at least one of the following: underground; indoor; and inside a car. Correspondingly, the first indication information is used to indicate at least one of the following:
indicating that the user equipment is on the ground;
indicating that the user equipment is underground;
indicating that the user equipment is indoors;
indicating that the user equipment is outdoors;
indicating that the user equipment is in the car; and
indicating that the user equipment is out the car.

In an optional embodiment, the user equipment prediction information of the second time period includes at least one of the following:
location prediction information of the user equipment within the second time period;
speed prediction information of the user equipment within the second time period;
direction prediction information of the user equipment within the second time period;
prediction indication information indicating that the user equipment is located in an external area or an internal area within the second time period;
the total number of user located in a second area within the second time period;
the total number of user equipment located in the second area within the second time period;
the number of user equipment located in a first traffic environment in the second area within the second time period;
a proportion of the number of user equipment located in the first traffic environment in the second area within the second time period;
an average moving speed of user equipment located in the first traffic environment in the second area within the second time period;
a direction of a first transportation means located in the second area within the second time period;
the number of user equipment with a same direction in the first transportation means located in the second area within the second time period;
the number of user equipment located in the second area within the second time period and whose moving speed exceeds a preset value;
a proportion of the number of user equipment located in the second area within the second time period and whose moving speed exceeds the preset value;
the number of user equipment with a first direction in the second area within the second time period; and
a proportion of the number of user equipment with the first direction in the second area within the second time period; where
the first transportation means is one of the total vehicles located in the second area within the second time period.

It should be noted that the first traffic environment includes at least one of walking, riding a bicycle, taking a bus, taking a subway, and taking a car. The first transportation means is at least one of the following transportation means: walking, riding a bicycle, taking a bus, taking a subway, taking a car, and the like.

It should be noted that the proportion of the number of user equipment located in the first traffic environment in the second area within the second time period indicates a proportion of the number of user equipment located in the first traffic environment in the second area within the second time period to the total number of user equipment located in the second area within the second time period.

It should be noted that the proportion of the number of user equipment located in the second area within the second time period and whose moving speed exceeds the preset value indicates a proportion of the number of user equipment located in the second area within the second time period and whose moving speed exceeds the preset value to the total number of user equipment located in the second area within the second time period.

It should be noted that the proportion of the number of user equipment with the first direction in the second area within the second time period indicates a proportion of the number of user equipment with the first direction in the second area within the second time period to the total number of user equipment located in the second area within the second time period.

Optionally, the method further includes: collecting, by the first network element, statistics on statistical information of the first time period based on the user equipment location data of the first time period, where the statistical information of the first time period includes at least one of the following:
the total number of user located in the second area within the first time period;
the total number of user equipment located in the second area within the first time period;
the number of user equipment located in a first traffic environment in the second area within the first time period;
a proportion of the number of user equipment located in the first traffic environment in the second area within the first time period;
an average moving speed of user equipment located in the first traffic environment in the second area within the first time period;
a direction of the first transportation means located in the second area within the first time period;
the number of user equipment with a same direction in the first transportation means located in the second area within the first time period;
the number of user equipment located in the second area within the first time period and whose moving speed exceeds a preset value;
a proportion of the number of user equipment located in the second area within the first time period and whose moving speed exceeds the preset value;
the number of user equipment with a first direction in the second area within the first time period; and
a proportion of the number of user equipment with the first direction in the second area within the first time period; where
the first transportation means is one of the total vehicles located in the second area within the first time period.

Optionally, the first network element is a network element with a network data analytics function NWDAF.

Optionally, the method further includes: sending, by the first network element, the user equipment prediction information of the second time period or the statistical information of the first time period to a user of the NWDAF.

It should be noted that the proportion of the number of user equipment located in the first traffic environment in the second area within the first time period indicates a proportion of the number of user equipment located in the first traffic environment in the second area within the first time period to the total number of user equipment located in the second area within the first time period.

It should be noted that the proportion of the number of user equipment located in the second area within the first time period and whose moving speed exceeds the preset value indicates a proportion of the number of user equipment located in the second area within the first time period and whose moving speed exceeds the preset value to the total number of user equipment located in the second area within the first time period.

It should be noted that the proportion of the number of user equipment with the first direction in the second area within the first time period indicates a proportion of the number of user equipment with the first direction in the second area within the first time period to the total number of user equipment located in the second area within the first time period.

The external area includes at least one of the following: ground; outdoor; and outside a car; and the internal area includes at least one of the following: underground; indoor; and inside a car. Correspondingly, the prediction indication information is used to indicate at least one of the following:
indicating that the user equipment is on the ground;
indicating that the user equipment is underground;
indicating that the user equipment is indoors;
indicating that the user equipment is outdoors;
indicating that the user equipment is in the car; and
indicating that the user equipment is out the car.

In at least one embodiment of this application, in a case that the user equipment location data of the first time period includes first indication information indicating that the user equipment is in an external area or an internal area, the prediction indication information included in the user equipment prediction information of the second time period is different from the first indication information. In this case, the prediction indication information output by the traffic model or the supervised learning model may be referred as modified indication information.

Alternatively, in a case that the user equipment location data of the first time period does not include the first indication information indicating that the user equipment is in an external area or an internal area, the user equipment prediction information of the second time period includes the prediction indication information.

In an optional embodiment, the user equipment prediction information of the second time period output by the traffic model further includes:
a predicted vehicle of the user equipment within the second time period.

In another optional embodiment, the user equipment prediction information of the second time period output by the supervised learning model further includes:
a regional hotspot map within the second time period; where the regional hotspot map is used for indicating at least one of the following:
a probability that the user equipment is located in a first area within the second time period;
a change trend of a speed of the user equipment within the second time period;
the number of user equipment located in the first area within the second time period; and
a change trend of the number of user equipment located in the first area within the second time period.

In at least one embodiment of this application, before the inputting, by the first network element, the user equipment location data of the first time period into a traffic model, the method further includes:
performing, by the first network element, data filtering on the user equipment location data of the first time period to obtain location data meeting a preset condition;
performing, by the first network element, environment judgment for the user equipment based on the location data meeting the preset condition and a historical usage model of the user equipment, and determining a current traffic environment of the user equipment, where the traffic environment includes at least one of walking, riding a bicycle, taking a bus, taking a subway, and taking a car; and
determining, by the first network element based on the current traffic environment of the user equipment, a traffic model corresponding to the current traffic environment of the user equipment; where
the inputting, by the first network element, the user equipment location data of the first time period into a traffic model includes:
   inputting, by the first network element, the user equipment location data meeting the preset condition within the first time period into the traffic model corresponding to the current traffic environment of the user equipment.

It should be noted that the data filtering function is to implement judgment on correctness of the reported user equipment location data and deletion of incorrect location data, for example, the moving speed exceeds a speed of normal vehicles (exceeding 400km/h), the age of location information expires, the accuracy does not meet a requirement, or the timestamp is within an allowable range of input data. The user equipment location data meeting the preset condition can be understood as that remaining user equipment location data obtained after data filtering on the user equipment location data of the first time period and deletion of the incorrect location data is the user equipment location data meeting the preset condition.

For example, if the first indication information is provided in the user equipment location data, the process of environment judgment is relatively simple: if underground is indicated and vertical coordinates of a location are in a relatively deep location, it is determined that the current traffic environment of the user equipment is subway, and a probability of being in the subway is relatively high; if ground and outdoors are indicated and the speed is 2-5km/h, it is determined that the current traffic environment of the user is walking and a probability of commuting on foot is relatively high.

For another example, if the first indication information is not provided in the user equipment location data, the environment judgment is performed based on a current geographical location, speed and direction: if the direction of the user has not changed for a long time and the speed remains at 20-40 km/h, it is determined that the current traffic environment of the user equipment is car driving; or if there is no road (residential area or bridge) in the current geographical location of the user equipment and the user equipment speed is about 80 km/h, it is determined that the user equipment is probably in the subway.

In at least one embodiment of this application, before the inputting, by the first network element, the user equipment location data of the first time period into a traffic model, the method further includes:
performing, by the first network element, training and correction on the traffic model based on the location data of the first time period.

The performing, by the first network element, training and correction on the traffic model based on the user equipment location data of the first time period includes:
performing, by the first network element, data filtering on the user equipment location data of the first time period to obtain location data meeting a preset condition;
performing, by the first network element, environment judgment for the user equipment based on the location data meeting the preset condition and a historical usage model of the user equipment, and determining a current traffic environment of the user equipment, where the traffic environment includes at least one of walking, riding a bicycle, taking a bus, taking a subway, and taking a car;
inputting, by the first network element, the location data meeting the preset condition into a traffic model corresponding to the current traffic environment of the user equipment, and obtaining user equipment prediction information of a third time period output by the traffic model; and
comparing, by the first network element, the user equipment prediction information of the third time period with location data of the third time period, and performing training and correction on the traffic model based on a comparison result; where the third time period is before the second time period.

The data filtering function is to implement judgment on correctness of the reported user equipment location data and deletion on incorrect location data, for example, the moving speed exceeds a speed of normal vehicles (exceeding 400km/h), the age of location information expires, the accuracy does not meet a requirement, or the timestamp is within an allowable range of input data.

For example, the first network element uses the traffic model to predict a location of a fixed time in the future, compares the user equipment location information at this time with the predicted information, and constantly corrects a difference. If the model difference is excessively large, the traffic model is corrected by using the user equipment location information at this time.

In at least one embodiment of this application, the inputting, by the first network element, the user equipment location data of the first time period into a supervised learning model includes:
inputting, by the first network element, user equipment location data meeting a timeliness requirement into the supervised learning model.

Before the inputting, by the first network element, user equipment location data meeting a timeliness requirement into the supervised learning model, the method further includes:
performing, by the first network element, training by using historical location data of the user equipment to obtain the supervised learning model; and
verifying, by the first network element, output accuracy of the supervised learning model based on the user equipment location data meeting the timeliness requirement.

Optionally, the user equipment location data meeting the timeliness requirement includes user equipment location data before the second time period.

In this embodiment of this application, the NWDAF determines, based on the geographical location, speed, and direction information, the traffic environment (including but not limited to walking, riding a bicycle, taking a bus, taking a subway, taking a car and taking other transportation means) in which the user equipment is located, establishes a traffic model, and predicts a location and state of the user equipment in a future time period. Alternatively, the user equipment location data may also be used as a data set to provide prediction service in the supervised learning model of the NWDAF and predict the location and status of the user equipment in the future time period.

To more clearly describe the user equipment information prediction method provided in the embodiments of this application, the traffic model and the supervised learning model are described respectively with two examples.

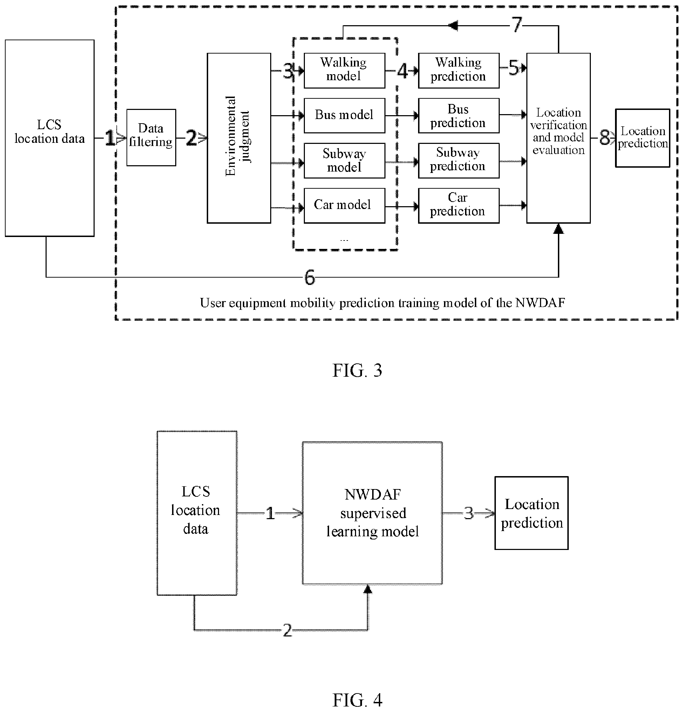

### Example 1, as shown in FIG. 3:

Step 1: The NWDAF obtains the user equipment location data of the first time period using the interface with the LCS architecture, and performs data filtering on the user equipment location data.

The data filtering function is to implement judgment on correctness of the user equipment location data and deletion of incorrect location data, for example, the moving speed exceeds a speed of normal vehicles (exceeding 400km/h), the age of location information expires, the accuracy does not meet a requirement, or the timestamp is within an allowable range of input data.

Step 2: Perform environment judgment for the user equipment by using the user equipment location data obtained through filtering, where the environmental judgment herein mainly refers to determining whether the user is on the ground or underground, or inside or outside the car, and finally determining the current traffic environment of the user based on both the speed and direction information.

For example, if the first indication information is provided in the user equipment location data, the process of environment judgment is relatively simple: if underground is indicated and vertical coordinates of a location are in a relatively deep location, it is determined that the current traffic environment of the user equipment is subway, and a probability of being in the subway is relatively high; if ground and outdoors are indicated and the speed is 2-5km/h, it is determined that the current traffic environment of the user is walking and a probability of commuting on foot is relatively high. In the final output of the traffic model, the indication information of the current traffic model correction is optionally provided.

For another example, if the first indication information is not provided in the user equipment location data, the environment judgment is performed based on a current geographical location, speed and direction: if the direction of the user has not changed for a long time and the speed remains at 20-40km/h, it is determined that the current traffic environment of the user equipment is car driving; or if there is no road (residential area or bridge) in the current geographical location of the user equipment and the user equipment speed is about 80km/h, it is determined that the user equipment is probably in the subway. In the final output of the traffic model, the indication information of the current traffic model prediction is optionally provided.

Step 3: Select a different traffic model based on the environmental judgment, where the model is not limited to a walking model, a bicycle model, a bus model, a subway model, a car model, a bicycle model, or the like. Optionally, in the environmental judgment of the NWDAF, the traffic model of the user is recorded, and traffic models usually applicable to different seasons and different times are used as one of weight factors in judgment. That is, factors of environmental judgment are mainly: historical usage model, current time, geographical location of the user equipment, speed, direction, indoors/outdoors indication, and the like.

Relatively complicated and indistinguishable models can be distinguished by a preset model parameter, such as a bus model and a car model, which can be determined based on an actual lane with higher-accuracy location information or based on a coincidence degree of routes, where bus routes have a higher coincidence degree; and it can also be determined, based on the number of user equipment in a unit area, that a user equipment density on the bus is relatively high.

Step 4: Input the user equipment location data into a corresponding traffic model.

Step 5: Use the corresponding traffic model to predict the user equipment information at a fixed time in the future.

Step 6: Compare the user equipment location data of the foregoing time with the user equipment information predicted by the traffic model, and constantly correct a difference.

Step 7: If the model difference is excessively large, the first network element modifies the traffic model based on the user equipment location data of the foregoing time. In this process, the indoors/outdoors indication may be revised or confirmed, and sent to the NWDAF user as final output information.

Step 8: The traffic model outputs data of vehicle, location prediction, speed prediction, direction prediction, indoors/outdoors indication, and the like required by the NWDAF user in a specific time in the future. Before this time point, the environmental judgment and model optimization may continue to improve, and the user equipment location data in use is all obtained before this time point.

This example proposes a method for predicting a user equipment location change by the NWDAF based on user equipment location data provided by the LCS. The commuting environment of the user equipment is jointly determined based on the current speed information of the user equipment as well as direction and reported indication information such as indoors or outdoors. A traffic route of the user in a future time period is determined based on historical speed information and historical stop location information, so as to provide an appropriate user equipment trajectory prediction map.

### Example 2, as shown in FIG. 4:

Step 1: The NWDAF obtains the user equipment location data of the first time period using an interface with the LCS architecture, and the user equipment location data is historical location information in the past, which may be location data of last week, yesterday, or an hour ago. Such data is used for training to continuously improve the accuracy of the model.

Step 2: The current user equipment location data provided is different from the location information provided in step 1 in timeliness, and is user equipment location data of the last second or meeting the timeliness requirement. The user equipment location data in step 2 is used for verifying accuracy of the supervised learning model. In addition, the user equipment location data is also used as input information in step 3 to provide more accurate prediction for a future time period.

Step 3: The data output by the supervised learning model is to provide information such as a location, a speed, and direction of the user equipment of a future time, and also provide a regional hotspot map of a future time period. The form of output may be: a probability that the user equipment is located in a specific area in the future time period; a change trend of speed of the user equipment in the future time period; the number and trend of user equipment in the specific area in the future time period, a corrected indoors/outdoors indication (if provided in step 1) of the user equipment, an indoors/outdoors indication (if not provided in step 1) of the user equipment, and the like.

This example uses the supervised learning model of the NWDAF, and the NWDAF trains the collected location data, including information such as geographical location information, accuracy information, speed, direction, or indoors/outdoors indication (including whether the LTE is on the ground or underground, indoors or outdoors, in or out of the car, or the like) during the supervised learning.

To sum up, in this embodiment of this application, the NWDAF determines, based on the geographical location, speed, and direction information, the traffic environment (including but not limited to walking, riding a bicycle, taking a bus, taking a subway, taking a car and taking other transportation means) in which the user equipment is located, establishes a traffic model, and predicts a location and state of the user equipment in a future time period. Alternatively, the user equipment location data may also be used as a data set to provide prediction service in the supervised learning model of the NWDAF and predict the location and status of the user equipment in the future time period.

For the user equipment information prediction method provided in the embodiments of this application, the execution subject can be a user equipment information prediction apparatus. In this embodiment of this application, the user equipment information prediction method being performed by the user equipment information prediction apparatus is used as an example to describe the user equipment information prediction apparatus provided in the embodiments of this application.

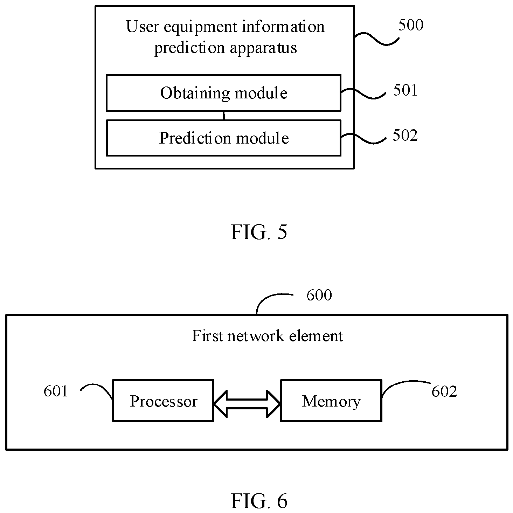

As shown in FIG. 5, an embodiment of this application further provides a user equipment information prediction apparatus 500, including:
an obtaining module 501, configured to obtain user equipment location data of a first time period using a location service LCS architecture; and
a prediction module 502, configured to input the user equipment location data of the first time period into a traffic model or a supervised learning model, and obtain user equipment prediction information of a second time period output by the traffic model or the supervised learning model.

In an optional embodiment, the user equipment prediction information of the second time period includes at least one of the following:
location prediction information of the user equipment within the second time period;
speed prediction information of the user equipment within the second time period;
direction prediction information of the user equipment within the second time period;
prediction indication information indicating that the user equipment is located in an external area or an internal area within the second time period;
the total number of user located in a second area within the second time period;
the total number of user equipment located in the second area within the second time period;
the number of user equipment located in a first traffic environment in the second area within the second time period;
a proportion of the number of user equipment located in the first traffic environment in the second area within the second time period;
an average moving speed of user equipment located in the first traffic environment in the second area within the second time period;
a direction of a first transportation means located in the second area within the second time period;
the number of user equipment with a same direction in the first transportation means located in the second area within the second time period;
the number of user equipment located in the second area within the second time period and whose moving speed exceeds a preset value;
a proportion of the number of user equipment located in the second area within the second time period and whose moving speed exceeds the preset value;
the number of user equipment with a first direction in the second area within the second time period; and
a proportion of the number of user equipment with the first direction in the second area within the second time period; where
the first transportation means is one of the total vehicles located in the second area within the second time period.

Optionally, the apparatus further includes a statistics collection module, where the statistics collection module is configured to collect statistics on statistical information of the first time period; where
the statistical information of the first time period includes at least one of the following:
the total number of user located in the second area within the first time period;
the total number of user equipment located in the second area within the first time period;
the number of user equipment located in a first traffic environment in the second area within the first time period;
a proportion of the number of user equipment located in the first traffic environment in the second area within the first time period;
an average moving speed of user equipment located in the first traffic environment in the second area within the first time period;
a direction of the first transportation means located in the second area within the first time period;
the number of user equipment with a same direction in the first transportation means located in the second area within the first time period;
the number of user equipment located in the second area within the first time period and whose moving speed exceeds a preset value;
a proportion of the number of user equipment located in the second area within the first time period and whose moving speed exceeds the preset value;
the number of user equipment with a first direction in the second area within the first time period; and
a proportion of the number of user equipment with the first direction in the second area within the first time period; where
the first transportation means is one of the total vehicles located in the second area within the first time period.

Optionally, the apparatus is a network element with a network data analytics function NWDAF.

Optionally, the apparatus further includes a sending module. The sending module is configured to send the user equipment prediction information of the second time period or the statistical information of the first time period to a user of the NWDAF.

In an optional embodiment, in a case that the user equipment location data of the first time period includes first indication information indicating that the user equipment is in an external area or an internal area, the user equipment prediction information of the second time period includes the prediction indication information, and the prediction indication information is different from the first indication information;
or
in a case that the user equipment location data of the first time period does not include the first indication information indicating that the user equipment is in an external area or an internal area, the user equipment prediction information of the second time period includes the prediction indication information.

In an optional embodiment, the user equipment prediction information of the second time period output by the traffic model further includes:
a predicted vehicle of the user equipment within the second time period.

In an optional embodiment, the user equipment prediction information of the second time period output by the supervised learning model further includes:
a regional hotspot map within the second time period; where the regional hotspot map is used for indicating at least one of the following:
a probability that the user equipment is located in a first area within the second time period;
a change trend of a speed of the user equipment within the second time period;
the number of user equipment located in the first area within the second time period; and
a change trend of the number of user equipment located in the first area within the second time period.

In an optional embodiment, the apparatus further includes:
a first filtering module, configured to perform data filtering on the user equipment location data of the first time period to obtain location data meeting a preset condition;
a first judgment module, configured to perform environment judgment for the user equipment based on the location data meeting the preset condition and a historical usage model of the user equipment, and determine a current traffic environment of the user equipment, where the traffic environment includes at least one of walking, riding a bicycle, taking a bus, taking a subway, and taking a car; and
a first model determining module, configured to determine, based on the current traffic environment of the user equipment, a traffic model corresponding to the current traffic environment of the user equipment; where
the prediction module includes:
   a first prediction submodule, configured to input the user equipment location data meeting the preset condition within the first time period into the traffic model corresponding to the current traffic environment of the user equipment.

In an optional embodiment, the apparatus further includes:
a training and correction module, configured to perform training and correction on the traffic model based on the location data of the first time period.

In an optional embodiment, the training and correction module includes:
a filtering submodule, configured to perform data filtering on the user equipment location data of the first time period to obtain location data meeting a preset condition;
a judgment submodule, configured to perform environment judgment for the user equipment based on the location data meeting the preset condition and a historical usage model of the user equipment, and determine a current traffic environment of the user equipment, where the traffic environment includes at least one of walking, riding a bicycle, taking a bus, taking a subway, and taking a car;
an obtaining submodule, configured to input the location data meeting the preset condition into a traffic model corresponding to the current traffic environment of the user equipment, and obtain user equipment prediction information of a third time period output by the traffic model; and
a correction submodule, configured to compare the user equipment prediction information of the third time period with location data of the third time period, and perform training and correction on the traffic model based on a comparison result; where the third time period is before the second time period.

In an optional embodiment, the prediction module includes:
a second prediction submodule, configured to input user equipment location data meeting a timeliness requirement into the supervised learning model.

In an optional embodiment, the apparatus further includes:
a training module, configured to perform training by using historical location data of the user equipment to obtain the supervised learning model; and
a verification module, configured to verify output accuracy of the supervised learning model based on the user equipment location data meeting the timeliness requirement.

In an optional embodiment, the user equipment location data meeting the timeliness requirement includes user equipment location data before the second time period.

In an optional embodiment, the user equipment location data of the first time period includes at least one of the following:
identification information of the user equipment;
a group identifier of a group to which the user equipment belongs;
geographic location information of the user equipment;
a moving speed of the user equipment at a current geographical location;
a moving direction of the user equipment at the current geographical location;
location accuracy information;
a time stamp;
an age of location data; and
first indication information indicating that the user equipment is located in an external area or an internal area.

In an optional embodiment, the external area includes at least one of the following: ground; outdoor; and outside a car; and the internal area includes at least one of the following: underground; indoor; and inside a car; where
the first indication information or the prediction indication information is used to indicate at least one of the following:
indicating that the user equipment is on the ground;
indicating that the user equipment is underground;
indicating that the user equipment is indoors;
indicating that the user equipment is outdoors;
indicating that the user equipment is in the car; and
indicating that the user equipment is out the car.

In this embodiment of this application, the first network element obtains the user equipment location data of the first time period using the LCS architecture, and predicts user equipment prediction information of a future time period based on a traffic model or supervised learning model corresponding to the user equipment location data, thus improving service performance of the first network element. This implements trajectory prediction for interaction between the first network element and a drone or vehicle networking architecture, thus providing intelligent traffic planning for an urban public transport system.

It should be noted that the user equipment information prediction apparatus provided in the embodiments of this application is an apparatus capable of executing the foregoing user equipment information prediction method, and all embodiments of the foregoing user equipment information prediction method are applicable to the apparatus, with the same or similar beneficial effects achieved.

The user equipment information prediction apparatus in this embodiment of the application may be an electronic device, such as an electronic device with an operating system, or a component in the electronic device, such as an integrated circuit or a chip. The electronic device may be user equipment or other devices than the user equipment. For example, the user equipment may include, but is not limited to, the types of the user equipment 11 listed above, and other devices may be a server, a network attached storage (Network Attached Storage, NAS), and the like. This is not limited in the embodiments of this application.

The user equipment information prediction apparatus provided in this embodiment of this application is capable of implementing the processes implemented in the method embodiments in FIG. 1 to FIG. 4, with the same technical effects achieved. To avoid repetition, details are not described herein again.

Optionally, as shown in FIG. 6, an embodiment of this application further provides a first network element 600, including a processor 601, a memory 602, and a program or instructions stored in the memory 602 and capable of running on the processor 601. When the program or the instructions are executed by the processor 601, the processes of the foregoing embodiments of the user equipment information prediction method are implemented, with the same technical effects achieved. To avoid repetition, details are not described herein again.

An embodiment of this application further provides a first network element, including a processor and a communication interface. The communication interface is configured to obtain user equipment location data of a first time period using a location service LCS architecture; and the processor is configured to input the user equipment location data of the first time period into a traffic model or a supervised learning model, and obtain user equipment prediction information of a second time period output by the traffic model or the supervised learning model. The first network element can alternatively be a network-side device. The network-side device embodiments correspond to the foregoing network-side device method embodiments, and the implementation processes and implementations of the foregoing method embodiments can be applied to the network-side device embodiments, with the same technical effects achieved.

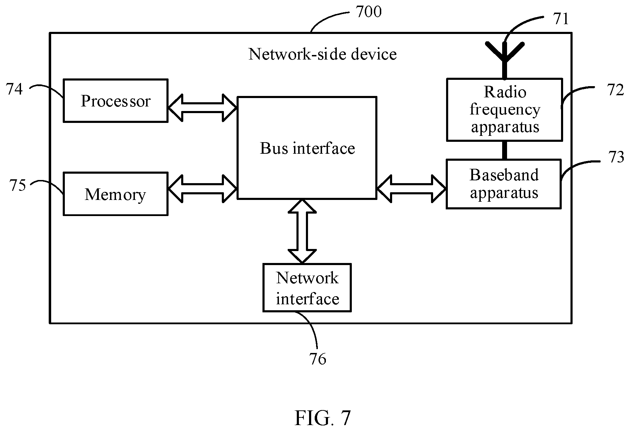

Specifically, an embodiment of this application further provides a network-side device. As shown in FIG. 7, the network-side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The method executed by the network-side device in the foregoing embodiments can be implemented in the baseband apparatus 73, and the baseband apparatus 73 includes a baseband processor.

The baseband apparatus 73 may include, for example, at least one baseband board, where a plurality of chips are disposed on the baseband board. As shown in FIG. 7, one of the chips is, for example, a baseband processor, and is connected to the memory 75 through the bus interface, to invoke a program in the memory 75 to perform the operations of the network device shown in the foregoing method embodiments.

The network-side device may further include a network interface 76, where the interface is, for example, a common public radio interface (Common Public Radio Interface, CPRI).

Specifically, the network-side device 700 in this embodiment of the present invention further includes: instructions or a program stored in the memory 75 and capable of running on the processor 74. The processor 74 invokes the instructions or program in the memory 75 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the user equipment information prediction method can be implemented, with the same technical effects achieved. To avoid repetition, details are not described herein again.

The processor is a processor in the user equipment described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the embodiments of the user equipment information prediction method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a storage medium, and when being executed by at least one processor, the computer program product is configured to implement the processes of the foregoing user equipment information prediction method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing user equipment (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A user equipment information prediction method, comprising:
obtaining, by a first network element, user equipment location data of a first time period using a location service LCS architecture; and
inputting, by the first network element, the user equipment location data of the first time period into a traffic model or a supervised learning model, and obtaining user equipment prediction information of a second time period output by the traffic model or the supervised learning model.

2. The method according to claim 1, wherein the user equipment prediction information of the second time period comprises at least one of the following:
location prediction information of the user equipment within the second time period;
speed prediction information of the user equipment within the second time period;
direction prediction information of the user equipment within the second time period;
prediction indication information indicating that the user equipment is located in an external area or an internal area within the second time period;
the total number of user located in a second area within the second time period;
the total number of user equipment located in the second area within the second time period;
the number of user equipment located in a first traffic environment in the second area within the second time period;
a proportion of the number of user equipment located in the first traffic environment in the second area within the second time period;
an average moving speed of user equipment located in the first traffic environment in the second area within the second time period;
a direction of a first transportation means located in the second area within the second time period;
the number of user equipment with a same direction in the first transportation means located in the second area within the second time period;
the number of user equipment located in the second area within the second time period and whose moving speed exceeds a preset value;
a proportion of the number of user equipment located in the second area within the second time period and whose moving speed exceeds the preset value;
the number of user equipment with a first direction in the second area within the second time period; and
a proportion of the number of user equipment with the first direction in the second area within the second time period; wherein
the first transportation means is one of the total vehicles located in the second area within the second time period.

3. The method according to claim 2, wherein
in a case that the user equipment location data of the first time period comprises first indication information indicating that the user equipment is in an external area or an internal area, the prediction indication information comprised in the user equipment prediction information of the second time period is different from the first indication information;
or
in a case that the user equipment location data of the first time period does not comprise the first indication information indicating that the user equipment is in an external area or an internal area, the user equipment prediction information of the second time period comprises the prediction indication information.

4. The method according to claim 2, wherein the user equipment prediction information of the second time period output by the traffic model further comprises:
a predicted vehicle of the user equipment within the second time period.

5. The method according to claim 2, wherein the user equipment prediction information of the second time period output by the supervised learning model further comprises:
a regional hotspot map within the second time period; wherein the regional hotspot map is used for indicating at least one of the following:
a probability that the user equipment is located in a first area within the second time period;
a change trend of a speed of the user equipment within the second time period;
the number of user equipment located in the first area within the second time period; and
a change trend of the number of user equipment located in the first area within the second time period.

6. The method according to claim 1, wherein before the inputting, by the first network element, the user equipment location data of the first time period into a traffic model, the method further comprises:
performing, by the first network element, data filtering on the user equipment location data of the first time period to obtain location data meeting a preset condition;
performing, by the first network element, environment judgment for the user equipment based on the location data meeting the preset condition and a historical usage model of the user equipment, and determining a current traffic environment of the user equipment, wherein the traffic environment comprises at least one of walking, riding a bicycle, taking a bus, taking a subway, and taking a car; and
determining, by the first network element based on the current traffic environment of the user equipment, a traffic model corresponding to the current traffic environment of the user equipment; wherein
the inputting, by the first network element, the user equipment location data of the first time period into a traffic model comprises:
inputting, by the first network element, the user equipment location data meeting the preset condition within the first time period into the traffic model corresponding to the current traffic environment of the user equipment.

7. The method according to claim 1, wherein before the inputting, by the first network element, the user equipment location data of the first time period into a traffic model, the method further comprises:
performing, by the first network element, training and correction on the traffic model based on the location data of the first time period.

8. The method according to claim 7, wherein the performing, by the first network element, training and correction on the traffic model based on the user equipment location data of the first time period comprises:
performing, by the first network element, data filtering on the user equipment location data of the first time period to obtain location data meeting a preset condition;
performing, by the first network element, environment judgment for the user equipment based on the location data meeting the preset condition and a historical usage model of the user equipment, and determining a current traffic environment of the user equipment, wherein the traffic environment comprises at least one of walking, riding a bicycle, taking a bus, taking a subway, and taking a car;
inputting, by the first network element, the location data meeting the preset condition into a traffic model corresponding to the current traffic environment of the user equipment, and obtaining user equipment prediction information of a third time period output by the traffic model; and
comparing, by the first network element, the user equipment prediction information of the third time period with location data of the third time period, and performing training and correction on the traffic model based on a comparison result; wherein the third time period is before the second time period.

9. The method according to claim 1, wherein the inputting, by the first network element, the user equipment location data of the first time period into a supervised learning model comprises:
inputting, by the first network element, user equipment location data meeting a timeliness requirement into the supervised learning model.

10. The method according to claim 9, wherein before the inputting, by the first network element, user equipment location data meeting a time and efficiency requirement into the supervised learning model, the method further comprises:
performing, by the first network element, training by using historical location data of the user equipment to obtain the supervised learning model; and
verifying, by the first network element, output accuracy of the supervised learning model based on the user equipment location data meeting the timeliness requirement.

11. The method according to claim 9 or 10, wherein the user equipment location data meeting the timeliness requirement comprises user equipment location data before the second time period.

12. The method according to any one of claims 1 to 11, wherein the user equipment location data of the first time period comprises at least one of the following:
identification information of the user equipment;
a group identifier of a group to which the user equipment belongs;
geographic location information of the user equipment;
a moving speed of the user equipment at a current geographical location;
a moving direction of the user equipment at the current geographical location;
location accuracy information;
a time stamp;
an age of location data; and
first indication information indicating that the user equipment is located in an external area or an internal area.

13. The method according to claim 2 or 12, wherein the external area comprises at least one of the following: ground; outdoor; and outside a car; and the internal area comprises at least one of the following: underground; indoor; and inside a car; wherein
the first indication information or the prediction indication information is used to indicate at least one of the following:
indicating that the user equipment is on the ground;
indicating that the user equipment is underground;
indicating that the user equipment is indoors;
indicating that the user equipment is outdoors;
indicating that the user equipment is in the car; and
indicating that the user equipment is out the car.

14. The method according to any one of claims 1 to 11, wherein the method further comprises:
collecting, by the first network element, statistics on statistical information of the first time period based on the user equipment location data of the first time period, wherein the statistical information of the first time period comprises at least one of the following:
the total number of user located in the second area within the first time period;
the total number of user equipment located in the second area within the first time period;
the number of user equipment located in a first traffic environment in the second area within the first time period;
a proportion of the number of user equipment located in the first traffic environment in the second area within the first time period;
an average moving speed of user equipment located in the first traffic environment in the second area within the first time period;
a direction of the first transportation means located in the second area within the first time period;
the number of user equipment with a same direction in the first transportation means located in the second area within the first time period;
the number of user equipment located in the second area within the first time period and whose moving speed exceeds a preset value;
a proportion of the number of user equipment located in the second area within the first time period and whose moving speed exceeds the preset value;
the number of user equipment with a first direction in the second area within the first time period; and
a proportion of the number of user equipment with the first direction in the second area within the first time period; wherein
the first transportation means is one of the total vehicles located in the second area within the first time period.

15. The method according to claim 1, 2, or 14, wherein
the first network element is a network element with a network data analytics function NWDAF; and
the method further comprises:
sending, by the first network element, the user equipment prediction information of the second time period or the statistical information of the first time period to a user of the NWDAF.

16. A user equipment information prediction apparatus, comprising:
an obtaining module, configured to obtain user equipment location data of a first time period using a location service LCS architecture; and
a prediction module, configured to input the user equipment location data of the first time period into a traffic model or a supervised learning model, and obtain user equipment prediction information of a second time period output by the traffic model or the supervised learning model.

17. The apparatus according to claim 16, wherein the user equipment prediction information of the second time period comprises at least one of the following:
location prediction information of the user equipment within the second time period;
speed prediction information of the user equipment within the second time period;
direction prediction information of the user equipment within the second time period;
prediction indication information indicating that the user equipment is located in an external area or an internal area within the second time period;
the total number of user located in a second area within the second time period;
the total number of user equipment located in the second area within the second time period;
the number of user equipment located in a first traffic environment in the second area within the second time period;
a proportion of the number of user equipment located in the first traffic environment in the second area within the second time period;
an average moving speed of user equipment located in the first traffic environment in the second area within the second time period;
a direction of a first transportation means located in the second area within the second time period;
the number of user equipment with a same direction in the first transportation means located in the second area within the second time period;
the number of user equipment located in the second area within the second time period and whose moving speed exceeds a preset value;
a proportion of the number of user equipment located in the second area within the second time period and whose moving speed exceeds the preset value;
the number of user equipment with a first direction in the second area within the second time period; and
a proportion of the number of user equipment with the first direction in the second area within the second time period; wherein
the first transportation means is one of the total vehicles located in the second area within the second time period.

18. The apparatus according to claim 17, wherein
in a case that the user equipment location data of the first time period comprises first indication information indicating that the user equipment is in an external area or an internal area, the user equipment prediction information of the second time period comprises the prediction indication information, and the prediction indication information is different from the first indication information;
or
in a case that the user equipment location data of the first time period does not comprise the first indication information indicating that the user equipment is in an external area or an internal area, the user equipment prediction information of the second time period comprises the prediction indication information.

19. The apparatus according to claim 17, wherein the user equipment prediction information of the second time period output by the traffic model further comprises:
a predicted vehicle of the user equipment within the second time period.

20. The apparatus according to claim 17, wherein the user equipment prediction information of the second time period output by the supervised learning model further comprises:
a regional hotspot map within the second time period; wherein the regional hotspot map is used for indicating at least one of the following:
a probability that the user equipment is located in a first area within the second time period;
a change trend of a speed of the user equipment within the second time period;
the number of user equipment located in the first area within the second time period; and
a change trend of the number of user equipment located in the first area within the second time period.

21. The apparatus according to claim 16, wherein the apparatus further comprises:
a first filtering module, configured to perform data filtering on the user equipment location data of the first time period to obtain location data meeting a preset condition;
a first judgment module, configured to perform environment judgment for the user equipment based on the location data meeting the preset condition and a historical usage model of the user equipment, and determine a current traffic environment of the user equipment, wherein the traffic environment comprises at least one of walking, riding a bicycle, taking a bus, taking a subway, and taking a car; and
a first model determining module, configured to determine, based on the current traffic environment of the user equipment, a traffic model corresponding to the current traffic environment of the user equipment; wherein
the prediction module comprises:
a first prediction submodule, configured to input the user equipment location data meeting the preset condition within the first time period into the traffic model corresponding to the current traffic environment of the user equipment.

22. The apparatus according to claim 16, wherein the apparatus further comprises:
a training and correction module, configured to perform training and correction on the traffic model based on the location data of the first time period.

23. The apparatus according to claim 22, wherein the training and correction module comprises:
a filtering submodule, configured to perform data filtering on the user equipment location data of the first time period to obtain location data meeting a preset condition;
a judgment submodule, configured to perform environment judgment for the user equipment based on the location data meeting the preset condition and a historical usage model of the user equipment, and determine a current traffic environment of the user equipment, wherein the traffic environment comprises at least one of walking, riding a bicycle, taking a bus, taking a subway, and taking a car;
an obtaining submodule, configured to input the location data meeting the preset condition into a traffic model corresponding to the current traffic environment of the user equipment, and obtain user equipment prediction information of a third time period output by the traffic model; and
a correction submodule, configured to compare the user equipment prediction information of the third time period with location data of the third time period, and perform training and correction on the traffic model based on a comparison result; wherein the third time period is before the second time period.

24. The apparatus according to claim 16, wherein the prediction module comprises:
a second prediction submodule, configured to input user equipment location data meeting a timeliness requirement into the supervised learning model.

25. The apparatus according to claim 24, wherein the apparatus further comprises:
a training module, configured to perform training by using historical location data of the user equipment to obtain the supervised learning model; and
a verification module, configured to verify output accuracy of the supervised learning model based on the user equipment location data meeting the timeliness requirement.

26. The apparatus according to claim 24 or 25, wherein the user equipment location data meeting the timeliness requirement comprises user equipment location data before the second time period.

27. The apparatus according to any one of claims 16 to 26, wherein the user equipment location data of the first time period comprises at least one of the following:
identification information of the user equipment;
a group identifier of a group to which the user equipment belongs;
geographic location information of the user equipment;
a moving speed of the user equipment at a current geographical location;
a moving direction of the user equipment at the current geographical location;
location accuracy information;
a time stamp;
an age of location data; and
first indication information indicating that the user equipment is located in an external area or an internal area.

28. The apparatus according to claim 17 or 27, wherein the external area comprises at least one of the following: ground; outdoor; and outside a car; and the internal area comprises at least one of the following: underground; indoor; and inside a car; wherein
the first indication information or the prediction indication information is used to indicate at least one of the following:
indicating that the user equipment is on the ground;
indicating that the user equipment is underground;
indicating that the user equipment is indoors;
indicating that the user equipment is outdoors;
indicating that the user equipment is in the car; and
indicating that the user equipment is out the car.

29. The apparatus according to any one of claims 16 to 25, wherein the apparatus further comprises:
a statistics collection module, wherein the statistics collection module is configured to collect statistics on statistical information of the first time period; wherein
the statistical information of the first time period comprises at least one of the following:
the total number of user located in the second area within the first time period;
the total number of user equipment located in the second area within the first time period;
the number of user equipment located in a first traffic environment in the second area within the first time period;
a proportion of the number of user equipment located in the first traffic environment in the second area within the first time period;
an average moving speed of user equipment located in the first traffic environment in the second area within the first time period;
a direction of the first transportation means located in the second area within the first time period;
the number of user equipment with a same direction in the first transportation means located in the second area within the first time period;
the number of user equipment located in the second area within the first time period and whose moving speed exceeds a preset value;
a proportion of the number of user equipment located in the second area within the first time period and whose moving speed exceeds the preset value;
the number of user equipment with a first direction in the second area within the first time period; and
a proportion of the number of user equipment with the first direction in the second area within the first time period; wherein
the first transportation means is one of the total vehicles located in the second area within the first time period.

30. The apparatus according to claim 16, 17, or 29, wherein
the apparatus is a network element with a network data analytics function NWDAF; and
the apparatus further comprises:
a sending module, configured to send the user equipment prediction information of the second time period or the statistical information of the first time period to a user of the NWDAF.

31. A first network element, comprising a processor and a memory, wherein a program or instructions capable of running on the processor are stored in the memory, and when the program or the instructions are executed by the processor, the steps of the user equipment information prediction method according to any one of claims 1 to 15 are implemented.

32. A readable storage medium, wherein the readable storage medium stores a program or instructions, and when the program or the instructions are executed by a processor, the steps of the user equipment information prediction method according to any one of claims 1 to 15 are implemented.
